# EUROPEAN PATENT SPECIFICATION

(11) **EP 3 239 060 B1**
(45) Date of publication and mention of the grant of the patent: **30.01.2019**
(21) Application number: 17168445.9
(22) Date of filing: 27.04.2017
(51) Int. Cl.: B65B 9/20, B65B 9/22, B65B 9/207, B65B 9/213, B65B 59/04, B65B 51/14, B65B 51/30, B29C 65/74, B29C 65/78, B29C 65/00, B29C 65/02

(54) **VERTICAL PACKAGING MACHINE**
VERTIKALE VERPACKUNGSMASCHINE
MACHINE D'EMBALLAGE VERTICAL

(30) Priority: 28.04.2016 IT UA20162990
(43) Date of publication of application: 01.11.2017
(73) Proprietor: Martini S.r.l., 35015 Galliera Veneta (Prov. of Padova) (IT)
(72) Inventor: MARTINI, Antonio, 35015 Galliera Veneta (PD) (IT)
(74) Representative: Cicconetti, Andrea

(56) References cited:
- US-A- 3 332 206
- US-A- 4 598 533
- US-A1- 2002 020 153
- US-A1- 2003 217 531
- US-A1- 2004 154 271
- US-A1- 2011 005 172
- US-A1- 2011 192 117

## Description

The invention concerns machines for packaging products and in particular it refers to a vertical packaging machine suitable for packaging in plastics bags or sacks loose products of small size or granular or powder products, for example food products as pasta, biscuits, rice, dried fruit, sweets or flour, sugar, etc. The known vertical packaging machines for packaging products in bags typically comprise a forming tube, arranged substantially vertically and around which a single or multi layer plastic film is wrapped, that is unwound from a reel, and folding and welding means which forms and closes the bags. The size and the shape in section of the forming tube depend on the shape and on the size of the bag to be produced. The forming tube is connected at the top with a hopper so as to receive from the latter the product which is dispensed in predetermined doses into the single bags before they are closed by welding means. The latter comprises one first welding unit which carries out the bag longitudinal welds that is the welds parallel to a feed direction of the film and a second welding unit which carries out the bag transverse welds, that is horizontal welds, almost orthogonal to the feed direction. The first welding unit is usually positioned between the film reel and the forming tube, while the second welding unit is positioned beneath the forming tube so as to close the bags.

The known vertical packaging machines can function in an intermittent mode or in a continuous mode.

Vertical packaging machines working in an intermittent mode alternate the pulling or dragging movement of the film to the longitudinal and transverse welding movements, which are carried out when the film is still. This packaging system enables to carry out precise and top quality welds and/or to carry out them with peculiar materials (high thickness and/or high density plastic materials), but it does not allow the packaging machine to achieve high production speeds.

Vertical packaging machines functioning in a continuous mode carry out the pulling of the film at an almost constant speed and carry out the longitudinal and transverse welds of the bags while the film is fed, by duly synchronizing the involved kinematic motions. The packaging continuous mode allows to achieve high production speeds, though makes it more complex to perform precise and top quality welds. Furthermore, in order to move the second welding unit with alternating linear motion at high frequency and synchronized with the feed motion of the film, proper movement means is necessary which are particularly complex and expensive and which require maintenance and regular adjustments to function in a correct and precise way.

By means of the known vertical packaging machines it is possible to produce from a plastic film various types of known and commercially spread bags or packages: "pillow" bags, "square bottom" with side weld or with four side welds, Doypack® bags.

However, as it is necessary to have appropriate folding and welding means for each bag as well as a suitable forming tube, a single packaging machine cannot produce all these different bags. More specifically, it is not possible to produce by the same vertical packaging machine a pillow bag or a square bottom bag and a Doypack-type bag, as this requires the total replacement not only of the first welding unit but also of the second welding unit due to the different ways of performing the welds of the two different types of bags. In particular, the replacement of the second welding unit is very complex and time-consuming and requires a long-lasting stop of the machine and thus of the production.

A disadvantage of the known vertical packaging machines is that they do not allow to carry out from one plastic material film all the different types of bags used for the packaging of loose products of small sizes or granular or powder products, in particular food products. Another disadvantage is that the aforesaid packaging machines can either only function in intermittent mode or in continuous mode with the above mentioned functional and performance limits.

US 3332206 disclose a machine for forming filled packages from a supplied substance and a continuous flat flexible web that includes means for guiding the flat flexible web along a path, a forming mandrel for shaping the web in tubular form while advancing same downwardly along the longitudinal axis of the mandrel. The machine further comprises means for longitudinally sealing together the edges of the web to form a tube, a vertically reciprocable carriage carrying transverse sealing means for grasping said tube and moving same on the downward movement of the package and for forming a completed filled package and tubular blank. The transverse sealing means comprises a pair of opposed sealing jaws rotatably supported on said carriage, each of said jaws having a recess therein, means mounting a blade in one of said recesses for movement of the blade into the recess of the other of said jaws when said opposing jaws are in contact to sever said package along said seal at the bottom of the downward movement of said carriage. The transverse sealing means further comprises means to release said jaws and means to rotate said jaws on the upward movement of said carriage whereby said jaws will be positioned to provide a seal in said tube at an angle to said severed seal.

US 4598533 discloses a lateral sealer device for a vertical packaging machine wherein a strip of film is wound in a cylindrical form around the outer circumferential surface of a supply pipe by a film former, to form a bag-like package, both side edges of the resultant film are overlapped and heat-bonded together, and the bag-like package of film is then heat-bonded laterally at a predetermined pitch. In this sealer device, a sealer frame, which is provided with a pair of lateral sealer members, which can toward and away from each other, is attached rotatably to a main frame of a packaging machine. The sealer frame is turned to a desired angle according to the packaging mode being employed and is fixed at a suitably-selected position, so that lateral heat-bonding of packages made of a strip of film can be done in a desired manner.

US 2011/005172 discloses a packing-packaging machine including sheet feeding means, a horizontal bonding unit for forming a bag body by forming horizontal bonding on a tubular body at predetermined intervals, and an object dispensing unit for dispensing an object to be packaged to the bag body during a repetition of the formation of the horizontal bonding. The object dispensing unit includes a shutter for opening and closing a falling path of a predetermined amount of the object into the bag body. The shutter is opened and closed such that the predetermined amount of the object and another predetermined amount of the object fall with a spacing therebetween, and that before the horizontal bonding is formed on the bag body packed with the predetermined amount of the object which has been dropped during opening-closing operation of the shutter, the other predetermined amount of the object for a next bag body starts falling.

An object of the invention is improving the known packaging machines, in particular the vertical packaging machines arranged to package loose products of small size or granular or powder products into plastic bags.

Another object is implementing a flexible and versatile packaging machine allowing to produce all the different types of bags that can be obtained by folding and welding a single or multilayer plastic film.

A further object is obtaining a flexible and versatile packaging machine, able to function both in intermittent and in continuous mode according to the type of bag to be produced and to the production needs.

Still a further object is implementing a high performance packaging machine that allows to obtain top quality packages and at the same time reaches high production speed.

Another further object is implementing a packaging machine having strong and cheap construction and having a precise and reliable functioning.

The packaging machine of the invention suitable for packaging in bags loose products of small size or powder or granular products comprises a forming tube around which a plastic film is wrapped, a feeding unit to supply the forming tube with determined doses of product to be packaged in the bags, a first welding unit to carry out on the film at least a longitudinal weld and parallel to a feed direction of the film along the forming tube and a second welding unit to carry out transverse welds on the film. The second welding unit is mounted to rotate about a rotation axis which is substantially parallel to the feed direction, so as to selectively carry out transverse welds along two different welding directions that are orthogonal to each other and to the feed direction.

As the second welding unit can rotate about the rotation axis, all the different types of bags or sacks resulting from a plastic material film, namely "pillow" bags, "square bottom" bags with side weld or with four side welds, Doypack® bags, can be carried out by the packaging machine of the invention.

The flexibility and versatility of the packaging machine of the invention are increased by the possibility to replace easily and quickly the first welding unit and the forming tube, both removable and interchangeable, so as to carry out on the film different types of longitudinal welds and to produce bags or sacks of different types, respectively.

The packaging machine of the invention also comprises moving means to support and move the second welding unit along the feed direction with a reciprocating rectilinear motion so that it can carry out transverse welds in a working stroke, while the film is moved with a continuous motion.

Moving means comprises a carriage supporting the second welding unit and slidingly connected to a supporting frame of the packaging machine, actuating means to move the carriage and balancing means to cooperate with the actuating means so as to move the carriage, in particular in an upward movement, in particular in a returning stroke between two operative positions. Actuating means comprises electrical actuating means of the linear type while balancing means comprises at least a pneumatic or hydraulic cylinder, that is connected to a reservoir of pressurized fluid, and that is fixed to a supporting frame as well as connected with and acting on the carriage.

Thanks to the moving means provided with actuating means of linear electric type and with balancing means comprising at least a pneumatic or hydraulic cylinder, the packaging machine is able to achieve high production speed, while carrying out welds that have adequate precision and top quality.

In alternative, moving means can maintain the second welding unit fixed and stationary in a determined position in an intermittent functionality mode of the packaging machine.

Such functioning option can be advantageously used to carry out high precision and top quality welds and/or to carry out the packaging using peculiar materials, for example high density and/or high thickness multilayer plastic films.

The invention shall be better understood and implemented referring to the enclosed drawings which show some exemplary and non-limiting embodiments, wherein:
- Figure 1 is a front view of the packaging machine of the invention arranged for packaging a first type of bag and with a second welding unit arranged in a first operative position;
- Figure 2 is a front view of the packaging machine of Figure 1 with the second welding unit arranged in a second operative position;
- Figure 3 is a perspective front view of the machine of Figure 1;
- Figure 4 is a perspective front view of the machine of Figure 2;
- Figure 5 is a front view of the packaging machine of the invention arranged for packaging a second type of bag and with the second welding unit arranged in the first operative position;
- Figure 6 is a front view of the machine of Figure 5 with the second welding unit arranged in the second operative position;
- Figure 7 is a perspective front view of the machine of Figure 6;
- Figure 8 to 11 are perspective views of bags that can be produced by the packaging machine of the invention;
- Figure 12 is a side view which schematically illustrates foldings and welds carried out on a plastic film to produce a first type of bag in the packaging machine of Figure 1;
- Figure 13 is a side view which schematically illustrates foldings and welds carried out on the plastic film to produce a second type of bag in the packaging machine of Figure 5;
- Figure 14 is a scheme of the balancing means of the packaging machine of Figure 1.

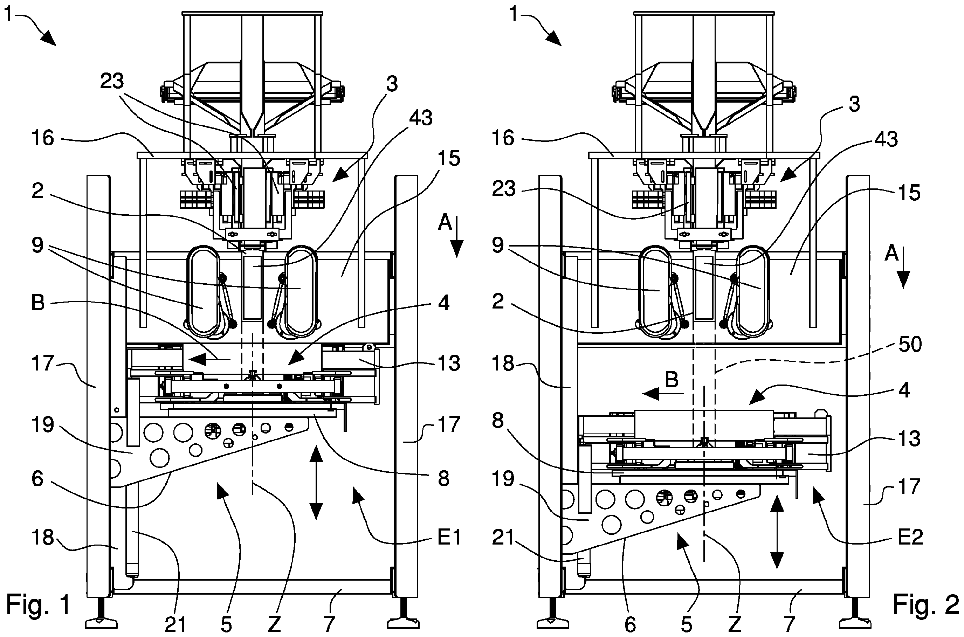

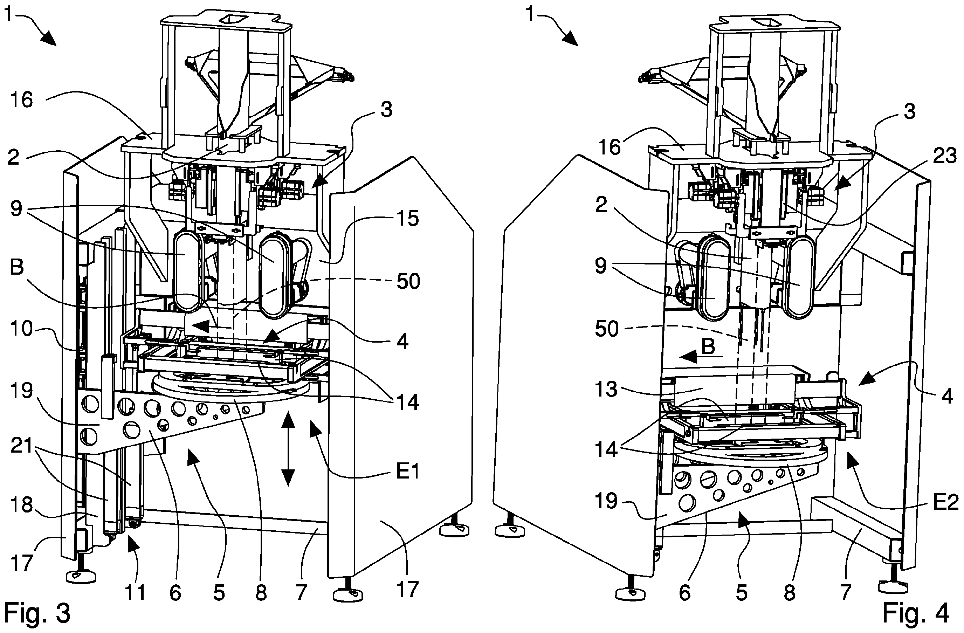

Referring to Figures 1 to 7, a packaging machine 1 according to the invention is illustrated, arranged to package in bags 101, 102, 103, 104 loose products of small size or granular or powder products, for example food products as pasta, biscuits, rice, dried fruit, sweets or flour, sugar, etc. More precisely, the packaging machine 1 is able to produce bags or sacks by properly folding, welding and cutting a film or pellicle 50 made of plastic material, single or multi layer, introducing predetermined doses of products into said bags.

The packaging machine 1 comprises a forming tube 2 around which the plastic film 50 is wrapped, that is unwound from a reel 51, and a feeding unit, of the known type and not shown in the Figures, in order to dispense into the forming tube 2 defined doses of product to be packaged in the bags.

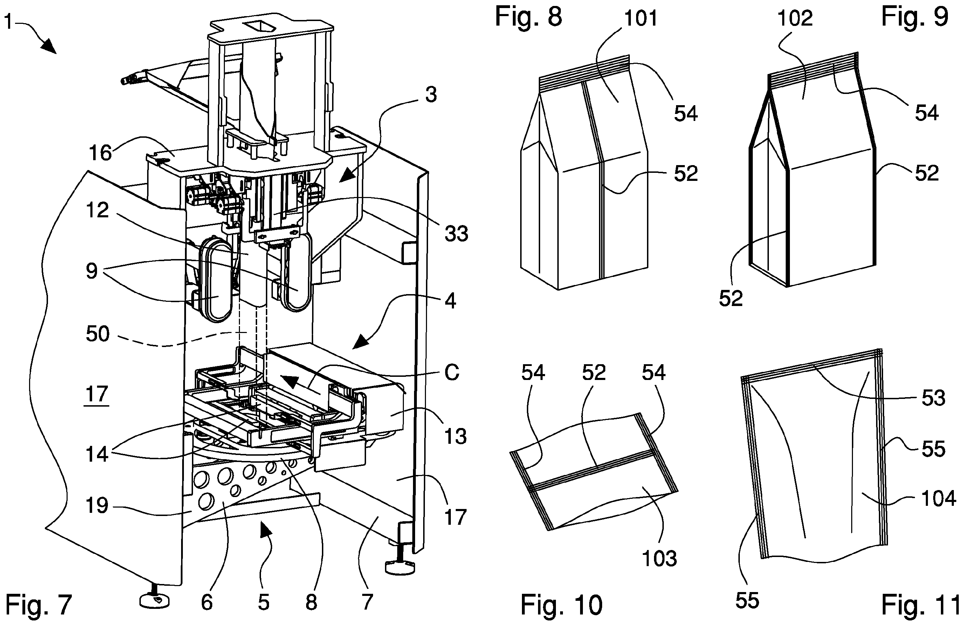

The forming tube 2 is substantially arranged vertically beneath the feeding unit, which comprises a product hopper or reservoir and a valve adapted to release predetermined doses of products into the forming tube 2, on a cyclic basis coordinated with the functioning of the machine. The forming tube 2 has a shape (cross section) corresponding to the one of the bag to be produced. Figures 1 to 4 show for exemplary purposes a forming tube 2 having substantially quadrangular section and arranged to form a bag or sack 101 of the so called "square bottom" type with a single side weld (Figure 8) or a "square bottom" bag or sack 102 with four side welds (Figure 9).

The machine 1 comprises a first welding unit 3 for carrying out on the film 50 at least a longitudinal weld 52 parallel to a feed direction A of the film 50 along the forming tube 2 and a second welding unit 4 for carrying out on the film 50 transverse welds 54 in particular almost orthogonal to the feed direction A.

The first welding unit 3 is arranged along the forming tube 2, below the feeding unit of the product and the second welding unit 4 is arranged downstream the forming tube 2 and the first welding unit 3 along the feed direction A.

The second welding unit 4 is mounted rotatably about a rotation axis Z, substantially parallel to the feed direction A, so as to rotate and selectively carry out transverse welds 54, 55 at least along two welding directions B, C that are orthogonal to each other and to the feed direction A, as it is better explained in the hereinafter description.

The rotation of the second welding unit 4 may be performed manually by an operator or automatically through proper motor means controlled by a management and control unit of the machine, of the known type and not described in detail.

The second welding unit 4 comprises a couple of welding jaws 14 that are mutually opposite and movable between a closed position D1, in which they are in abutment against the film 50 in order to carry out thereon a transverse weld 54, 55, and an open position D2, in which the welding jaws 14 are spaced apart and disengaged from the film 50. The welding jaws 14 are movable on a welding plane W that is almost orthogonal to the rotation axis Z and substantially horizontal.

The welding jaws 14 are driven by driving means 13 with reciprocating linear motion and coordinated with the feed motion of the film 50 along the feed direction A.

Cutting means is associated to the second welding unit 4 for cutting transversally the film 50 at the transverse welds so as to separate from the film 50 the bags which are closed and containing respective doses of product.

The cutting means comprises, for example, a blade or knife housed in one of the welding jaws 14 and a counter-blade housed in the remaining welding jaw 14.

The packaging machine 1 further comprises moving means 5 to support and move the second welding unit 4 along the feed direction A, in parallel to the rotation axis Z, with a reciprocating rectilinear motion so that the aforesaid second welding unit 4 can carry out the transverse welds 54, 55 in a working stroke, while the film 50 is moved with a continuous motion.

As it will be better described in the hereinafter description, the packaging machine 1 of the invention may in fact function by moving the film 50 with continuous motion or with intermittent motion, according to the characteristics of the film 50 and/or of the bags to be produced and filled in with the product.

Hence, the second welding unit 4 is driven by moving means 5 in its working stroke from a first operative position E1, wherein it is nearer to the forming tube 2 to receive the folded film 50 in output from the latter, to a second operative position E2, wherein said second welding unit 4 is more spaced apart from the forming tube 2.

Moving means 5 comprises a carriage 6 supporting the second welding unit 4 and slidingly connected to a supporting frame 7 of the machine 1, and actuating means 10 to move the aforesaid carriage 6 along the feed direction A. The actuating means 10 comprises in particular, electric actuators of the linear type comprising for example a linear electric motor acting directly on the carriage 6 or a rotatable electric motor connected to the carriage 6 through motion transmission means adapted to transform the rotating motion of the electric motor into reciprocating linear motion and comprising, for example, a screw-nutscrew unit, a rod-crank kinematic motion or similar.

Moving means 5 further includes balancing or compensation means 11 arranged to cooperate with the actuating means 10 to move the carriage 6. More precisely, balancing means 11 comprises one or more, for example two, cylinders 21 of the pneumatic or hydraulic type, connected to a reservoir 22 of pressurised fluid (air, oil) and arranged to assist the actuating means 10, in particular in the upward movement of the carriage 6, in a returning stroke of the latter from the second operative position E2 to the first operative position E1.

In the embodiment shown in the Figures, the balancing means 11 is of the pneumatic type and comprises a couple of pneumatic cylinders 21 which are in flowing connection with a reservoir 22 of pressurised air, fixed to the supporting frame 7 and connected with and acting on the carriage 6.

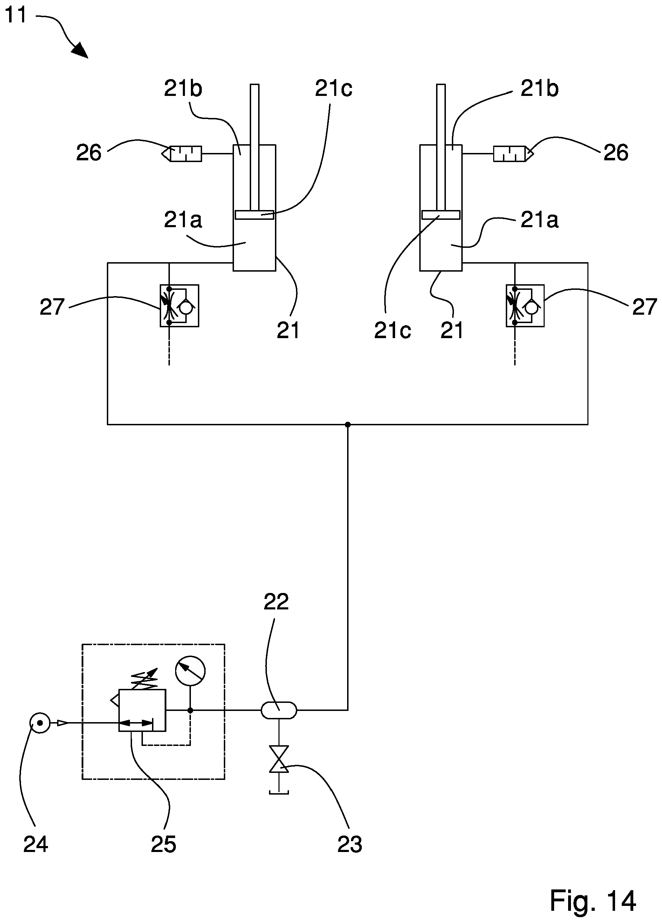

As illustrated by the scheme of Figure 14 showing a pneumatic circuit of the balancing means 11, the reservoir 22 of pressurised air is provided with a valve 23 adapted to make an established air-flow flow away from said reservoir 22 into an outer environment in a substantially constant and continuous way during the functioning of the machine 1. The reservoir 22 is also connected to and supplied by a source 24 of pressurized air to restore the air leaking out through the valve 23. More precisely, a pressure regulator 25 is interposed between the reservoir 22 and the source 24 of pressurised air to regulate the inlet of pressurised air in said reservoir 22, for example to allow the input of pressurised air coming from the source 24 in the reservoir 22 when the air pressure in the latter reaches a prefixed value (minimum value). Thereby, a continuous exchange of pressurised air occurs inside the reservoir 22 allowing to maintain the temperature of the air controlled and substantially constant during the operation of the packaging machine 1. The continuous exchange of the air allows also to check the air pressure too inside the reservoir 22.

The two pneumatic cylinders 21 are of the single effect type and each comprises a respective piston 21c forming inside the cylinder body a first chamber 21a connected and supplied by the reservoir 22 and a second chamber 21b in communication with the outer environment, for example through a silencer 26. A flow regulator 27 is connected to the first chamber 21a to check an output air speed from the latter, in particular the speed the air is sent with from the cylinders 21 into the reservoir 22.

The supporting frame 7 of the machine 1 comprises a front wall 15 to which a middle structure 16 supporting the forming tube 2, the feeding unit of the product and the first welding unit 3 and a pair of side walls 17 are fixed, at least one of which is provided with sliding guides 18 to which the carriage 6 of the moving means 5 is slidably connected. The carriage 6 comprises a pair of supporting arms 19 each other parallel and sliding and cantilever mounted on the respective sliding guides 18.

Each cylinder 21 body is fixed to the side wall 17 provided with sliding guides 18, while the free end of a stem of the relative piston 21c is fixed to the carriage 6, in particular to a respective supporting arm 19.

Actuating means 10 is fixed as well to the side wall 17 provided with guides and are connected with and acting on the carriage 6.

A plate 8 is mounted on the carriage 6 rotatably about the rotation axis Z to support the second welding unit 4. More precisely, the plate 8 is rotatably mounted on the supporting arms 19 and supports the couple of welding jaws 14 and the relative driving means 13.

The first welding unit 3 is removable and interchangeable with one or more further first welding units able to carry out respective and different types of longitudinal welds on the film 50. To this end, the first welding unit 3 forms a module reversibly connected with the supporting frame 7, in particular with the middle structure 16 thereof.

In the embodiment shown in Figures 1 to 4, wherein the packaging machine 1 of the invention is arranged to function in continuous mode, the first welding unit 3 comprises first welding elements 23 and a second welding element 43 which enable to carry out longitudinal welds continuously on the film 50. More precisely, the first welding elements 23 are arranged to carry out continuously the four longitudinal welds 52 of the square bottom bags 102 with four side welds, while the second welding element 43 is arranged to carry out the single longitudinal weld 52 of the square bottom bags 101 with side weld.

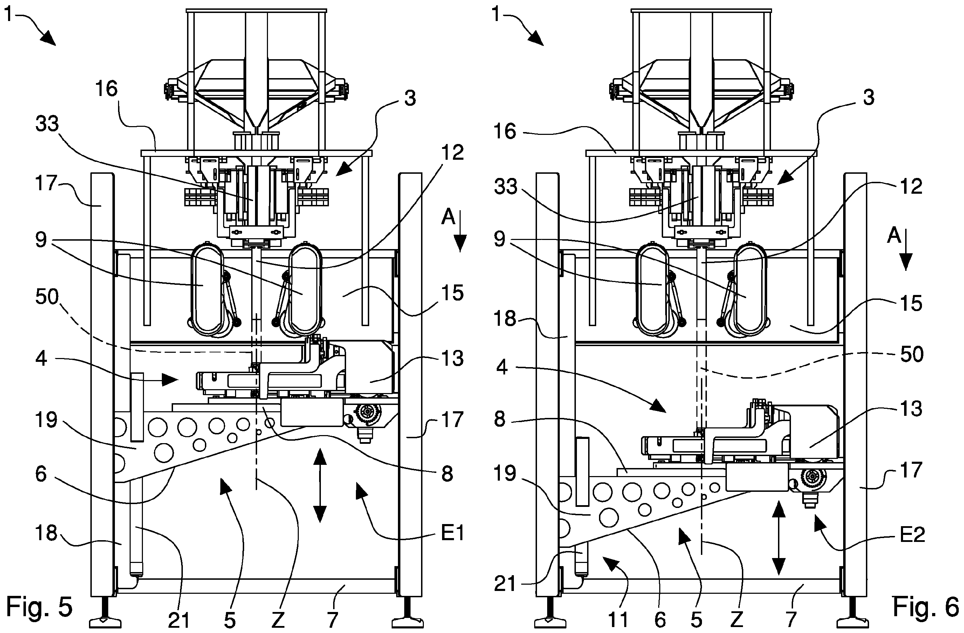

In alternative, as shown in Figures 5 to 7, the first welding unit 3 may comprise third welding elements 33 arranged to carry out continuously the longitudinal weld 53 of Doypack® type bags 104.

The first welding unit 3 may also be equipped with welding elements able to carry out longitudinal welds when the film 50 is moved with an intermittent motion.

Similarly, the forming tube 2 is removable and interchangeable with one or more further forming tubes of different size and shapes in order to produce different types of bags or bags of different sizes.

The packaging machine 1 is also provided with trailing means 9 to engage and move the film 50 wrapped around the forming tube 2 along the feed direction A. The trailing means 9 is fixed to the front wall 15 of the supporting frame 7, interposed along the feed direction A between the first welding unit 3 and the second welding unit 4. The trailing means 9 is movable between an inactive position wherein it is disengaged from the film 50 and an active position wherein it is engaged with the film 50. The trailing means 9 comprises for example a pair of straps or pulling belts, motorized with closed loop, arranged to receive and drag the film 50 towards the second welding unit 4.

The packaging machine 1 of the invention is configured to function by moving the film 50 with continuous or intermittent motion, according to the specific production needs (quality of the welds, size and shape of the bags) and/or to the plastic material to be folded and welded (high density and/or high thickness multilayer film).

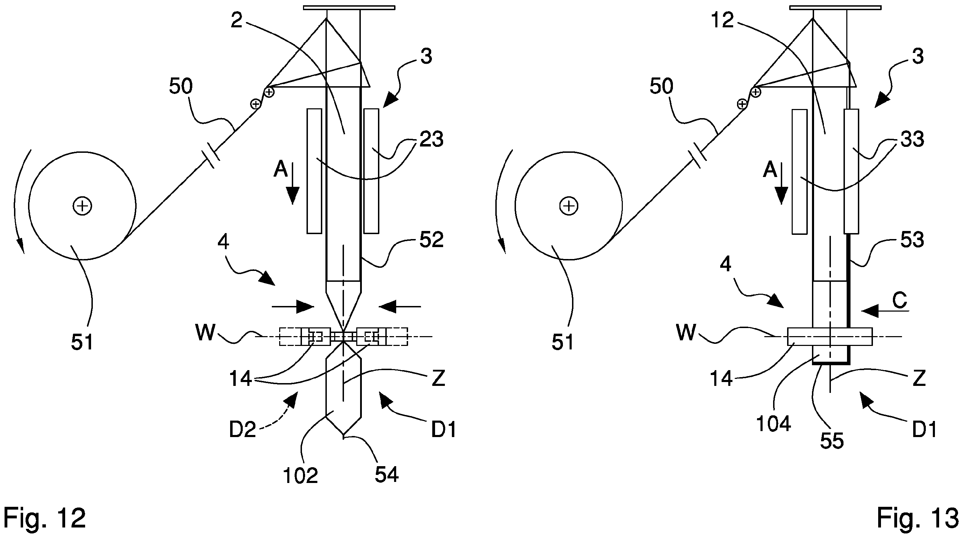

In Figures 1 to 4 and 12, the packaging machine 1 of the invention is shown configured to function in continuous mode to package square bottom bags 102 with four side welds (Figure 9), obtained by folding the film 50 around the forming tube 2 having quadrangular cross section and carrying out four longitudinal welds 52 on the film 50 and two transverse welds 54, as schematically illustrated in Figure 12, showing the folding process of the film 50 for this type of bag.

To this end, while functioning, the film 50, unwound from the respective reel 51, is wrapped around the forming tube 2. The first welding unit 3 is able to carry out continuously the longitudinal welds 52 on the film 50 by means of the first welding elements 23, while the welding jaws 14 of the second welding unit 4 carry out the transverse welds 54. More precisely, the welding jaws 14 carry out a transverse weld which is cut or dissected by cutting means associated to the jaws 14 thereof. Thereby, a first transverse weld which closes at the top the bag 102 filled with product (dispensed through the forming tube 2 right before the closure of the welding jaws 14 on the film 50) and a second transverse weld which closes the bag at the bottom arranged upstream the second welding unit 4 are carried out.

Thanks to the moving means 5, the second welding unit 4 can be moved with reciprocating linear motion along the feed direction A so as to perform a working stroke in which it carries out the transverse weld 54 on the advancing film 50 and a returning stroke in which the second welding unit 4 is taken into the first initial operative position E1 in which it starts interacting with the film 50.

The actuating means 10 connected with and controlled by the management and control unit of the packaging machine 1 allows to regulate and set in a precise and at the same time simple and quick way, the extent of the working stroke and the profile of the linear speed which the carriage 6 of the moving means 5 moves with during the working stroke and the returning stroke.

The aforesaid operative parameters (extent of the stroke, speed, acceleration) are selected and set according to the type of package to be produced, in other words according to the film plastic material, to the type and/or size of the bag.

It must be noted that in this operative configuration of the packaging machine 1, the second welding unit 4 is oriented around the rotation axis Z in such a way that the welding jaws 14 carry out a transverse weld 54 arranged along a first welding direction B parallel to the welding plane W and to the front wall 15 of the supporting frame 7. The welding jaws 14 are thus linearly movable in mutual approach or removal along a direction substantially orthogonal to the rotation axis Z and to the front wall 15.

Thanks to the balancing means 11 which cooperates with the actuating means 10 to move the carriage 6 upwards, during the returning stroke of the latter from the second operative position E2 to the first operative position E1, size and/or power of the actuating means 10 may be restrained as it is restrained the push they must exert on the carriage 6. More precisely, during the returning stroke 6, the pressurised air coming from the reservoir 22 into the first chambers 21a of the cylinders 21 determines the extension of the respective pistons of the latter that is a push upwards exerted on the carriage 6 which sums up to the push exerted by the actuating means 10.

On the contrary, during the working stroke from the first operative position E1 to the second operative position E2, the pneumatic cylinders 21 substantially brake and slow down the downward motion of the carriage 6, the pressurised air being pushed by the pistons 21c in the backward movement inside the reservoir 22 serving as compensating pneumatic cushion. Thereby, the balancing means 11 substantially balances the weight of the second welding unit 4 and of the carriage 6, while the actuating means 10 regulates and controls the extent of the working stroke and the profile of the linear speed with which the carriage 6 must move in the working and returning strokes.

It must also be noted that the balancing means 11 of the packaging machine 1 of the invention allows to keep the temperature and the air pressure controlled inside the reservoir 22 thereby avoiding both the heating of the whole packaging machine 1 (the heat spreading from the reservoir 22 and from the cylinders) and its functioning at high pressure which might compromise the regular functioning of the balancing means 11 as well as their duration and reliability over time. Containing the temperature and the pressure of the air inside the reservoir 22 allows to limit, for example, the thermal and dynamic stress affecting the gaskets of the reservoir 22 and of the whole pneumatic circuit of the balancing means 11.

While the packaging machine is in function, the air in the reservoir 22 is in fact affected by continuous compressions/decompressions caused by the movements of the pistons 21c of the cylinders 21 connected to the carriage 6, that moves with a reciprocating movement. The compressions/decompressions of the air inside the reservoir 22 determine a gradual heating of the air thereof. However, thanks to the valve 23 which allows the outlet of a determined air flow from the reservoir 22, and thanks to the pressure regulator 25 which allows the inlet of pressurised air coming from the source 24 in the reservoir 22, when the temperature in the latter reaches a predetermined value (minimum value), it is possible to have a continuous exchange of air inside the reservoir 22 that allows to keep the temperature controlled and substantially constant during the functioning of the packaging machine 1. By avoiding the heating of the air, an increase of the air pressure is at the same time avoided in the reservoir 22.

By using the second welding element 43, arranged before the forming element 2 and between the railing means 9, it is also possible to produce square bottom bags 102 with side weld, having a single longitudinal weld 52 and one transverse weld 54 with the same orientation of the second welding unit 4.

By mounting on the packaging machine 1 a proper forming tube and using the second welding unit 43, it is also possible to produce pillow bags 103 having one longitudinal weld 52 and two transverse welds 54 with the same orientation of the second welding unit 4.

The replacement of the forming tube 2 and/or of the first welding unit 3 is quick and simple and it takes a very reduced stopping time of the machine.

Figure 5 to 7 and 13 show the packaging machine 1 of the invention configured to function in continuous motion to package Doypack ® bags 104 (Figure 11). These Doypack ® bags 104 are obtained by folding the film 50 around a forming tube 12 substantially having oval elongated cross section and carrying out on the film 50 one end longitudinal weld 53 and two transverse welds 55, as schematically illustrated in Figure 13 which shows the folding process of the film 50 for this kind of bag.

While the machine is in function, the film 50, unwound from the reel 51, is wrapped around the forming tube 12. The first welding unit 3 is provided with third welding elements 33 able to carry out continuously the longitudinal weld 53 on the film 50, while the welding jaws 14 of the second welding unit 4 carry out the transverse welds 55 and at the same time they cut the film 50 to separate from the latter the bag 104 filled with product and closed.

In this case as well the moving means 5, with the actuating means 10 assisted by the balancing means 11, allows to move the second welding unit 4 with reciprocating linear motion, along the feed direction A, parallel to the rotation axis Z, so as to perform a working stroke, in which the transverse weld 55 is carried out on the advancing film 50 and a returning stroke wherein said second welding unit 4 is moved from the lower second operative position E2 to the higher first operative position E1, in which the welding jaws 14 start interacting with the film.

In this operative configuration of the packaging machine 1, the second welding unit 4 is oriented around the rotation axis Z so that the welding jaws 14 carry out a transverse weld 55 arranged along a second welding direction C parallel to the welding plane W and substantially orthogonal to the front wall 15 of the supporting frame 7. Welding jaws 14 are thus linearly movable in mutual approach or removal along a direction substantially orthogonal to the rotation axis Z and parallel to the front wall 15.

The packaging machine 1 of the invention is thus able to carry out all the different types of bags or sacks made from a plastic film 50 thanks to the second welding unit 4 rotatably about the rotation axis Z, parallel to the feed direction A. It is in fact possible , by rotating the second welding unit 4, to carry out on the film 50, in a quick and simple way, transverse welds along the two welding directions B, C orthogonal to each other and to the rotation axis Z (vertical).

Furthermore, thanks to the moving means 5, it is possible to move the second welding unit 6 with reciprocating rectilinear motion, so that the welding jaws 14 can carry out the transverse welds 54, 55 in a working stroke, while the film 50 is moved through a continuous motion. Thereby, the packaging machine 1 of the invention is able to reach high production speed, while maintaining adequate precision and quality.

In alternative, moving means 5 can maintain the second welding unit 5 stationary in a determined position while functioning with an intermittent motion of the packaging machine 1.

Such a functioning option may be used to carry out precise and top quality welds and/or carry out packages using peculiar materials, such as high density and/or high thickness multilayer plastic films.

The packaging machine 1 of the invention is thus particularly flexible and versatile in the production.

Such flexibility is also due to the possibility to replace, in a quick and easy way, the first welding unit 3 and the forming tube 2, 12, both removably fixed to the middle structure 16 of the supporting frame 7.

## Claims

1. Packaging machine (1) for packaging products in bags (101; 102; 103; 104), in particular loose products of small size or powder or granular products, comprising
- a forming tube (2; 12) around which a film (50) made of plastic material is wrapped that is unwound from a reel (51),
- a feeding unit for dispensing into said forming tube (2; 12) defined doses of product to be packaged in said bags (101; 102; 103; 104);
- a first welding unit (3) for carrying out on said film (50) at least a longitudinal weld (52; 53) parallel to a feed direction (A) of said film (50) along said forming tube (2; 12);
- a second welding unit (4) for carrying out on said film (50) transverse welds (54; 55), in particular almost orthogonal to said feed direction (A), mounted rotatably about a rotation axis (Z), in particular substantially parallel to said feed direction (A), so as to carry out transverse welds (54; 55) at least along two welding directions (B, C) that are orthogonal to each other and to said feed direction (A); and
- moving means (5) for supporting and moving said second welding unit (4) along said feed direction (A) with a reciprocating rectilinear motion, in particular said second welding unit (4) carrying out said transversal welds (54; 55) in a working stroke while said film (50) is moved with a continuous motion, said moving means (5) comprising a carriage (6), supporting said second welding unit (4) and slidingly connected to a supporting frame (7) of said machine (1), and actuating means (10) to move said carriage (6);
said packaging machine (1) being **characterized in that** said moving means (5) further comprises balancing means (11) arranged to cooperate with said actuating means (10) for moving said carriage (6) and comprising one or more cylinders (21) in flowing connection with a reservoir (22) of pressurised air, fixed to said supporting frame (7) and connected with and acting on said carriage (6), wherein said balancing means (11) comprises a couple of pneumatic cylinders (21) fixed to said supporting frame (7) and connected with and acting on said carriage (6), said pneumatic cylinders (21) being in flowing connection with said reservoir (22) that is provided with a valve (23) adapted to make an established air-flow flow away from the reservoir (22) into an outer environment, said reservoir (22) being connected to and supplied by a source (24) of pressurised air to restore the air leaking out through said valve (23), in particular to maintain a temperature of the air in said reservoir (22) substantially constant.

2. Packaging machine (1) according to claim 1, wherein said first welding unit (3) is arranged below said feeding unit and along said forming tube (2; 12) and said second welding unit (4) is arranged downstream said forming tube (2; 12) and said first welding unit (3) along said feed direction (A).

3. Packaging machine (1) according to claim 1 or 2, wherein said second welding unit (4) comprises a couple of welding jaws (14) that are mutually opposite and movable between a closed position (D1), in which they are in abutment against said film (50) in order to carry out thereon a transversal weld (54; 55), and an open position (D2), in which said welding jaws (14) are spaced apart and disengaged from said film (50).

4. Packaging machine (1) according to claim 3, wherein said welding jaws (14) are movable on a welding plane (W) that is almost orthogonal to said rotation axis (Z).

5. Packaging machine (1) according to any preceding claim, wherein said actuating means (10) comprises electric actuating means of the linear type, comprising in particular a linear electric motor acting directly on said carriage (6) or a rotatable electric motor connected to said carriage (6) through motion transmission means adapted to transform the rotating motion of said electric motor into reciprocating linear motion.

6. Packaging machine (1) according to any preceding claim, wherein said balancing means (11) comprises a pressure regulator (25) interposed between said reservoir (22) and said source (24) of pressurized air to regulate the inlet of pressurized air into said reservoir (22).

7. Packaging machine (1) according to any preceding claim, wherein said supporting frame (7) comprises a front wall (15) to which said feeding unit, said forming tube (2; 12) and said first welding unit (3) are fixed, and at least one side wall (17) provided with sliding guides (18) to which said carriage (6) is slidably connected.

8. Packaging machine (1) according to claim 7, wherein said actuating means (10) and said at least one cylinder (21) are fixed to said side wall (17) provided with sliding guides (18).

9. Packaging machine (1) according to any preceding claim, wherein said moving means (5) comprises a plate (8) that is mounted on said carriage (6) rotatably about said rotation axis (Z) to support said second welding unit (4).

10. Packaging machine (1) according to claim 3 or 4, wherein said second welding unit (4) comprises driving means (13) for moving said welding jaws (14) with reciprocating linear motion that is coordinated with a feed motion of said film (50).

11. Packaging machine (1) according to any preceding claim, wherein said first welding unit (3) is removable and interchangeable with one or more further first welding units able to carry out respective and different types of longitudinal welds on said film (50).

12. Packaging machine (1) according to any preceding claim, comprising trailing means (9) to engage and move said film (50) wrapped on said forming tube (2; 12) along said feed direction (A), in particular said trailing means (9) being movable between an inactive position wherein it is disengaged from said film (50) and an active position wherein it is engaged with said film (50).

13. Packaging machine (1) according to any preceding claim, comprising cutting means associated to said second welding unit (4) for cutting transversely said film (50) at said transverse welds (54; 55) so as to separate from said film (50) the bags (101; 104) which are closed and containing respective doses of product.

## Patentansprüche

1. Verpackungsmaschine (1) zum Verpacken von Produkten in Beuteln (101; 102; 103; 104), insbesondere losen Produkten mit kleiner Größe oder Pulver- oder granulären Produkten, die umfasst
- ein Formungsrohr (2; 12), um das ein Film (50), der aus Kunststoffmaterial besteht, gewickelt wird, der von einer Rolle (51) abgewickelt wird,
- eine Zuführungseinheit zum Abgeben von definierten Dosen von in den Beuteln (101; 102; 103; 104) zu verpackendem Produkt in das Formungsrohr (2; 12);
- eine erste Schweißeinheit (3) zum Ausführen mindestens einer Längsschweißung (52; 53) an dem Film (50) parallel zu einer Vorschubrichtung (A) des Films (50) entlang des Formungsrohrs (2; 12);
- eine zweite Schweißeinheit (4) zum Ausführen von Querschweißungen (54; 55) an dem Film (50), insbesondere fast orthogonal zur Vorschubrichtung (A), die drehbar um eine Drehachse (Z) montiert ist, die insbesondere im Wesentlichen parallel zur Vorschubrichtung (A) ist, um Querschweißungen (54; 55) zumindest entlang zwei Schweißrichtungen (B, C) auszuführen, die zueinander und zur Vorschubrichtung (A) orthogonal sind; und
- eine Bewegungseinrichtung (5) zum Abstützen und Bewegen der zweiten Schweißeinheit (4) entlang der Vorschubrichtung (A) mit einer geradlinigen Hin- und Herbewegung, wobei insbesondere die zweite Schweißeinheit (4) die Querschweißungen (54; 55) in einem Arbeitshub ausführt, während der Film (50) mit einer kontinuierlichen Bewegung bewegt wird, wobei die Bewegungseinrichtung (5) einen Wagen (6), der die zweite Schweißeinheit (4) abstützt und mit einem Stützrahmen (7) der Maschine (1) verschiebbar verbunden ist, und eine Betätigungseinrichtung (10), um den Wagen (6) zu bewegen, umfasst;
wobei die Verpackungsmaschine (1) **dadurch gekennzeichnet ist, dass** die Bewegungseinrichtung (5) ferner eine Ausgleichseinrichtung (11) umfasst, die angeordnet ist, um mit der Betätigungseinrichtung (10) zum Bewegen des Wagens (6) zusammenzuwirken, und einen oder mehrere Zylinder (21) in Strömungsverbindung mit einem Reservoir (22) für Druckluft umfasst, die an dem Stützrahmen (7) befestigt sind und mit dem Wagen (6) verbunden sind und auf diesen wirken, wobei die Ausgleichseinrichtung (11) ein Paar von pneumatischen Zylindern (21) umfasst, die am Stützrahmen (7) befestigt sind und mit dem Wagen (6) verbunden sind und auf diesen wirken, wobei die pneumatischen Zylinder (21) mit dem Reservoir (22) in Strömungsverbindung stehen, das mit einem Ventil (23) versehen ist, das dazu ausgelegt ist zu veranlassen, dass eine hergestellte Luftströmung vom Reservoir (22) weg in eine äußere Umgebung strömt, wobei das Reservoir (22) mit einer Quelle (24) für Druckluft verbunden ist und durch diese versorgt wird, um die Luft, die durch das Ventil (23) austritt, zu erneuern, insbesondere um eine Temperatur der Luft im Reservoir (22) im Wesentlichen konstant zu halten.

2. Verpackungsmaschine (1) nach Anspruch 1, wobei die erste Schweißeinheit (3) unter der Zuführungseinheit und entlang des Formungsrohrs (2; 12) angeordnet ist und die zweite Schweißeinheit (4) stromabwärts des Formungsrohrs (2; 12) und der ersten Schweißeinheit (3) entlang der Vorschubrichtung (A) angeordnet ist.

3. Verpackungsmaschine (1) nach Anspruch 1 oder 2, wobei die zweite Schweißeinheit (4) ein Paar von Schweißbacken (14) umfasst, die zueinander entgegengesetzt sind und zwischen einer geschlossenen Position (D1), in der sie am Film (50) in Anlage sind, um daran eine Querschweißung (54; 55) auszuführen, und einer offenen Position (D2), in der die Schweißbacken (14) beabstandet sind und vom Film (50) gelöst sind, beweglich sind.

4. Verpackungsmaschine (1) nach Anspruch 3, wobei die Schweißbacken (14) in einer Schweißebene (W) beweglich sind, die zur Drehachse (Z) fast orthogonal ist.

5. Verpackungsmaschine (1) nach einem vorangehenden Anspruch, wobei die Betätigungseinrichtung (10) eine elektrische Betätigungseinrichtung des linearen Typs umfasst, die insbesondere einen linearen Elektromotor, der direkt auf den Wagen (6) wirkt, oder einen drehbaren Elektromotor, der mit dem Wagen (6) durch eine Bewegungsübertragungseinrichtung verbunden ist, die dazu ausgelegt ist, die Drehbewegung des Elektromotors in eine lineare Hin- und Herbewegung zu transformieren, umfasst.

6. Verpackungsmaschine (1) nach einem vorangehenden Anspruch, wobei die Ausgleichseinrichtung (11) einen Druckregler (25) umfasst, der zwischen das Reservoir (22) und die Quelle (24) für Druckluft eingefügt ist, um den Einlass von Druckluft in das Reservoir (22) zu regeln.

7. Verpackungsmaschine (1) nach einem vorangehenden Anspruch, wobei der Stützrahmen (7) eine Vorderwand (15), an der die Zuführungseinheit, das Formungsrohr (2; 12) und die erste Schweißeinheit (3) befestigt sind, und mindestens eine Seitenwand (17), die mit Gleitführungen (18) versehen ist, mit denen der Wagen (6) verschiebbar verbunden ist, umfasst.

8. Verpackungsmaschine (1) nach Anspruch 7, wobei die Betätigungseinrichtung (10) und der mindestens eine Zylinder (21) an der Seitenwand (17) befestigt sind, die mit Gleitführungen (18) versehen ist.

9. Verpackungsmaschine (1) nach einem vorangehenden Anspruch, wobei die Bewegungseinrichtung (5) eine Platte (8) umfasst, die an dem Wagen (6) drehbar um die Drehachse (Z) montiert ist, um die zweite Schweißeinheit (4) abzustützen.

10. Verpackungsmaschine (1) nach Anspruch 3 oder 4, wobei die zweite Schweißeinheit (4) eine Antriebseinrichtung (13) zum Bewegen der Schweißbacken (14) mit einer linearen Hin- und Herbewegung umfasst, die mit einer Vorschubbewegung des Films (50) koordiniert wird.

11. Verpackungsmaschine (1) nach einem vorangehenden Anspruch, wobei die erste Schweißeinheit (3) entfernbar und mit einer oder mehreren weiteren ersten Schweißeinheiten austauschbar ist, die jeweilige und unterschiedliche Typen von Längsschweißungen an dem Film (50) ausführen können.

12. Verpackungsmaschine (1) nach einem vorangehenden Anspruch mit einer Nachführungseinrichtung (9), um den Film (50), der auf das Formungsrohr (2; 12) gewickelt wird, in Eingriff zu bringen und entlang der Vorschubrichtung (A) zu bewegen, wobei insbesondere die Nachführungseinrichtung (9) zwischen einer inaktiven Position, in der sie vom Film (50) gelöst ist, und einer aktiven Position, in der sie mit dem Film (50) in Eingriff gebracht ist, beweglich ist.

13. Verpackungsmaschine (1) nach einem vorangehenden Anspruch mit einer Schneideinrichtung, die der zweiten Schweißeinheit (4) zugeordnet ist, zum Querschneiden des Films (50) an den Querschweißstellen (54; 55), um die Beutel (101; 104) vom Film (50) zu trennen, die geschlossen sind und jeweilige Dosen von Produkt enthalten.

## Revendications

1. Machine d'emballage (1) pour emballer des produits dans des sacs (101 ; 102 ; 103 ; 104), en particulier des produits en vrac de petite taille ou de la poudre ou des produits granulaires, comprenant
- un tube de formage (2 ; 12) autour duquel un film (50) fait de matière plastique est enroulé qui est déroulé à partir d'une bobine (51),
- une unité d'alimentation pour distribuer dans ledit tube de formage (2 ; 12) des doses définies de produit à emballer dans lesdits sacs (101 ; 102 ; 103 ; 104) ;
- une première unité de soudage (3) pour effectuer sur ledit film (50) au moins une soudure longitudinale (52 ; 53) parallèle à une direction d'alimentation (A) dudit film (50) le long dudit tube de formage (2 ; 12) ;
- une seconde unité de soudage (4) pour effectuer sur ledit film (50) des soudures transversales (54 ; 55), en particulier quasiment orthogonales à ladite direction d'alimentation (A), montée de manière rotative autour d'un axe de rotation (Z), en particulier sensiblement parallèle à ladite direction d'alimentation (A), de sorte à effectuer des soudures transversales (54 ; 55) au moins le long de deux directions de soudage (B, C) qui sont orthogonales l'une à l'autre et à ladite direction d'alimentation (A) ; et
- des moyens de déplacement (5) pour supporter et déplacer ladite seconde unité de soudage (4) le long de ladite direction d'alimentation (A) avec un mouvement alternatif rectiligne, en particulier ladite seconde unité de soudage (4) effectuant lesdites soudures transversales (54 ; 55) en une course de travail tandis que ledit film (50) est déplacé avec un mouvement continu, lesdits moyens de déplacement (5) comprenant un chariot (6), supportant ladite seconde unité de soudage (4) et connecté de manière coulissante à un cadre de support (7) de ladite machine (1), et des moyens d'actionnement (10) pour déplacer ledit chariot (6) ;
ladite machine d'emballage (1) étant **caractérisée en ce que** lesdits moyens de déplacement (5) comprennent en outre des moyens d'équilibrage (11) agencés pour coopérer avec lesdits moyens d'actionnement (10) pour déplacer ledit chariot (6) et comprenant un ou plusieurs vérins (21) en liaison d'écoulement avec un réservoir (22) d'air pressurisé, fixés audit cadre de support (7) et reliés à et agissant sur ledit chariot (6) dans lequel lesdits moyens d'équilibrage (11) comprennent une paire de vérins pneumatiques (21) fixés audit cadre de support (7) et reliés à et agissant sur ledit chariot (6), lesdits vérins pneumatiques (21) étant en liaison d'écoulement avec ledit réservoir (22) qui est doté d'une soupape (23) appropriée pour amener un écoulement d'air établi à s'écouler hors du réservoir (22) dans un environnement externe, ledit réservoir (22) étant relié à et approvisionné par une source (24) d'air pressurisé pour rétablir l'air fuyant à travers ladite soupape (23), en particulier pour maintenir une température de l'air dans ledit réservoir (22) sensiblement constante.

2. Machine d'emballage (1) selon la revendication 1, dans laquelle ladite première unité de soudage (3) est agencée en dessous de ladite unité d'alimentation et le long dudit tube de formage (2 ; 12) et ladite seconde unité de soudage (4) est agencée en aval dudit tube de formage (2 ; 12) et de ladite première unité de soudage (3) le long de ladite direction d'alimentation (A).

3. Machine d'emballage (1) selon la revendication 1 ou 2, dans laquelle ladite seconde unité de soudage (4) comprend une paire de mâchoires de soudage (14) qui sont mutuellement opposées et mobiles entre une position fermée (D1), dans laquelle elles sont en butée contre ledit film (50) afin d'effectuer sur celui-ci une soudure transversale (54 ; 55), et une position ouverte (D2), dans laquelle lesdites mâchoires de soudage (14) sont espacées et hors de prise avec ledit film (50).

4. Machine d'emballage (1) selon la revendication 3, dans laquelle lesdites mâchoires de soudage (14) sont mobiles sur un plan de soudage (W) qui est quasiment orthogonal audit axe de rotation (Z).

5. Machine d'emballage (1) selon l'une quelconque des revendications précédentes, dans laquelle lesdits moyens d'actionnement (10) comprennent des moyens d'actionnement électriques du type linéaire, comprenant en particulier un moteur électrique linéaire agissant directement sur ledit chariot (6) ou un moteur électrique rotatif relié audit chariot (6) par l'intermédiaire de moyens de transmission de mouvement appropriés pour transformer le mouvement de rotation dudit moteur électrique en un mouvement alternatif linéaire.

6. Machine d'emballage (1) selon l'une quelconque des revendications précédentes, dans laquelle lesdits moyens d'équilibrage (11) comprennent un régulateur de pression (25) interposé entre ledit réservoir (22) et ladite source (24) d'air pressurisé pour réguler l'entrée d'air pressurisé dans ledit réservoir (22).

7. Machine d'emballage (1) selon l'une quelconque des revendications précédentes, dans laquelle ledit cadre de support (7) comprend une paroi avant (15) à laquelle ladite unité d'alimentation, ledit tube de formage (2 ; 12) et ladite première unité de soudage (3) sont fixés, et au moins une paroi latérale (17) munie de guides de coulissement (18) auxquels ledit chariot (6) est relié de manière coulissante.

8. Machine d'emballage (1) selon la revendication 7, dans laquelle lesdits moyens d'actionnement (10) et ledit au moins un vérin (21) sont fixés à ladite paroi latérale (17) munie de guides de coulissement (18).

9. Machine d'emballage (1) selon l'une quelconque des revendications précédentes, dans laquelle lesdits moyens de déplacement (5) comprennent une plaque (8) qui est montée sur ledit chariot (6) de manière rotative autour dudit axe de rotation (Z) pour supporter ladite seconde unité de soudage (4).

10. Machine d'emballage (1) selon la revendication 3 ou 4, dans laquelle ladite seconde unité de soudage (4) comprend des moyens d'entraînement (13) pour déplacer lesdites mâchoires de soudage (14) avec un mouvement linéaire alternatif qui est coordonné avec un mouvement d'alimentation dudit film (50).

11. Machine d'emballage (1) selon l'une quelconque des revendications précédentes, dans laquelle ladite première unité de soudage (3) est amovible et interchangeable avec une ou plusieurs premières unités de soudage supplémentaires capables d'effectuer des types respectifs et différents de soudures longitudinales sur ledit film (50).

12. Machine d'emballage (1) selon l'une quelconque des revendications précédentes, comprenant des moyens de traction (9) pour entrer en prise avec et déplacer ledit film (50) enroulé sur ledit tube de formage (2 ; 12) le long de ladite direction d'alimentation (A), en particulier lesdits moyens de traction (9) étant mobiles entre une position inactive dans laquelle ils sont hors de prise avec ledit film (50) et une position active dans laquelle ils sont en prise avec ledit film (50).

13. Machine d'emballage (1) selon l'une quelconque des revendications précédentes, comprenant des moyens de coupe associés à ladite seconde unité de soudage (4) pour découper transversalement ledit film (50) au niveau desdites soudures transversales (54 ; 55) de sorte à séparer dudit film (50) les sacs (101 ; 104) qui sont fermés et contenant des doses respectives de produit.
